(19) Europäisches Patentamt
European Patent Office
Office européen des brevets

(11) EP 2 835 929 A1

(12) EUROPEAN PATENT APPLICATION

(43) Date of publication:
11.02.2015 Bulletin 2015/07

(51) Int Cl.:
*H04L 5/00* (2006.01)   *H04W 48/20* (2009.01)
*H04W 48/16* (2009.01)

(21) Application number: 14180501.0

(22) Date of filing: 11.08.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 09.08.2013 US 201361864114 P

(71) Applicant: Innovative Sonic Corporation
Taipei City
10049 (TW)

(72) Inventor: Tseng, Li-Chih
10049 Taipei City (TW)

(74) Representative: Hoefer & Partner
Pilgersheimer Straße 20
81543 München (DE)

(54) **Method and apparatus for small cell enhancement in a wireless communication system**

(57)    A methods and apparatus are disclosed for small cell enhancement in a wireless communication system. The method includes configuring a UE with at least a first cell and a second cell, wherein the first cell is associated with a Master evolved Node B (MeNB) and the second cell is associated with a Secondary evolved Node B (SeNB) (905). The method also includes receiving a command that carries information associated with activation or deactivation of cells (910). The method further includes determining whether to utilize or ignore the information associated with activation or deactivation of cells based on a determinative condition (915).

FIG. 8

Description

## CROSS-REFERENCE TO RELATED APPLICATIONS

The present Application claims the benefit of U.S. Provisional Patent Application Serial No. 61/864,114 filed on August 9, 2013, the entire disclosure of which is incorporated herein by reference.

## FIELD

This disclosure generally relates to wireless communication networks, and more particularly, to methods and apparatuses for small cell enhancement in a wireless communication system.

## BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

## SUMMARY

Methods and apparatus are disclosed for small cell enhancement in a wireless communication system and are defined in independent claims 1, 4, and 11, respectively. The respective dependent claims define preferred embodiments thereof, respectively. The method according to one aspect includes configuring a UE with at least a first cell and a second cell, wherein the first cell is associated with a Master evolved Node B (MeNB) and the second cell is associated with a Secondary evolved Node B (SeNB). This method also includes receiving a command that carries information associated with activation or deactivation of cells. This method further includes determining whether to utilize or ignore the information associated with activation or deactivation of cells based on a determinative condition.

## BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a reproduction of Figure 6.1.3.8-1: Activation/Deactivation MAC control element from 3GPP TS36.321 v11.3.0.

FIG. 6 is a reproduction of a Table from 3GPP TS36.300.

FIG. 7 is a table illustrating one exemplary embodiment.

FIG. 8 is a flow chart according to one exemplary embodiment.

FIG. 9 is a flow chart according to one exemplary embodiment.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. TS 36.321 V11.2.0 (2013-03), "E-UTRA; MAC protocol specification", TR36.392 v12.0.0 (2012-12), "Scenarios and Requirements for Small Cell Enhancements for E-UTRA and E-UTRAN", RP-122033, "New Study Item Description: Small Cell enhancements for E-UTRA and E-UTRAN - Higher-layer aspects", TS 36.300 V11.4.0 (2012-12), "E-UTRAN; Overall description; Stage 2", TS 36.331 V11.3.0 (2013-03), "E-UTRA; RRC protocol specification", R2-130420, "Protocol architecture alternatives for dual connectivity", R2-130570, "Scenarios and benefits of dual connectivity", and R2-110679, "Report of 3GPP TSG RAN WG2 meeting #72." The standards and documents listed above are hereby expressly incorporated by reference in their entirety.

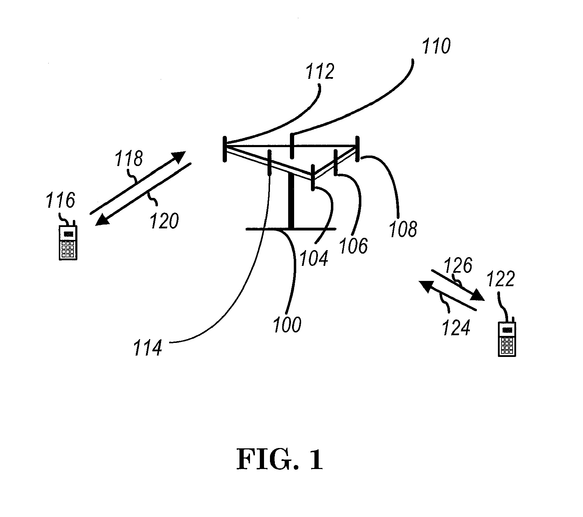

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNB, or some other terminology. An access terminal (AT) may also be called user equipment (UE), a wireless communication device, terminal, access terminal or some other terminology.

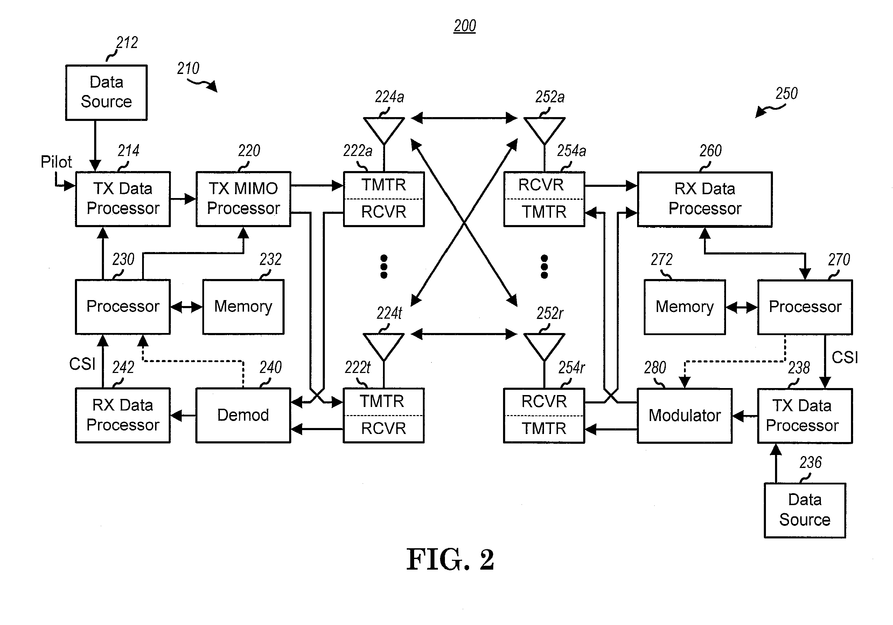

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

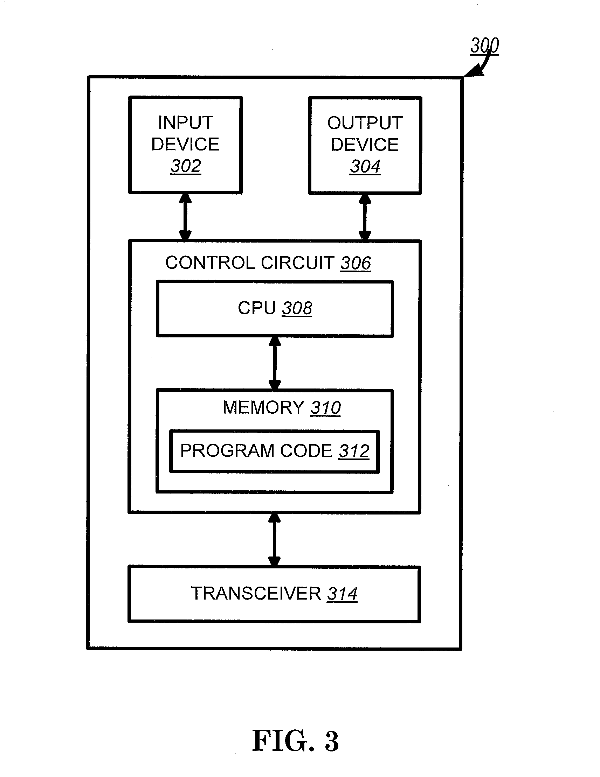

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

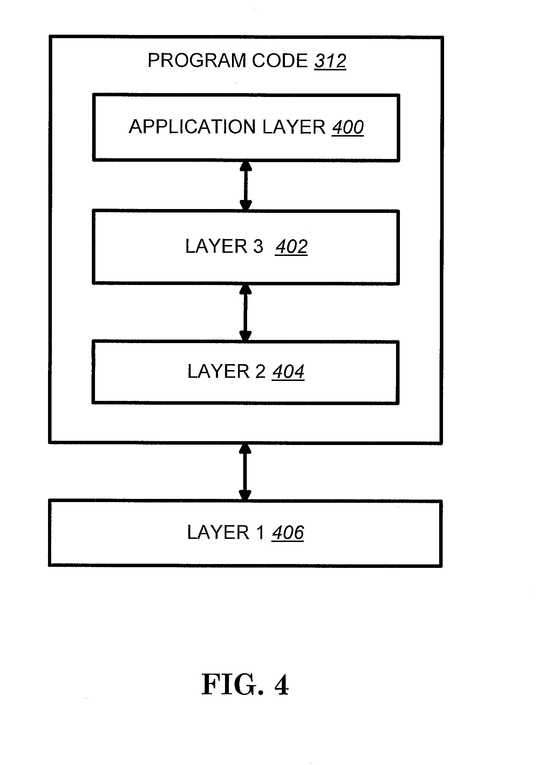

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A systems, the Layer 2 portion may include a Radio Link Control (RLC) layer and a Medium Access Control (MAC) layer. The Layer 3 portion may include a Radio Resource Control (RRC) layer.

In 3GPP TS36.321 v.11.3.0, a Random Access Procedure is discussed as follows:

**5.1 Random Access procedure**

**5.1.1 Random Access Procedure initialization**

The Random Access procedure described in this subclause is initiated by a PDCCH order or by the MAC sublayer itself. Random Access procedure on an SCell shall only be initiated by a PDCCH order. If a UE receives a PDCCH transmission consistent with a PDCCH order [5] masked with its C-RNTI, and for a specific Serving Cell, the UE shall initiate a Random Access procedure on this Serving Cell. For Random Access on the PCell a PDCCH order or RRC optionally indicate the *ra-PreambleIndex* and the *ra-PRACH-MaskIndex;* and for Random Access on an SCell, the PDCCH order indicates the *ra-PreambleIndex* with a value different from 000000 and the *ra-PRACH-MaskIndex*. For the pTAG preamble transmission on PRACH and reception of a PDCCH order are only supported for PCell.

Before the procedure can be initiated, the following information for related Serving Cell is assumed to be available [8]:

- the available set of PRACH resources for the transmission of the Random Access Preamble, *prach-ConfigIndex.*

- the groups of Random Access Preambles and the set of available Random Access Preambles in each group (PCell only):

    The preambles that are contained in Random Access Preambles group A and Random Access Preambles group B are calculated from the parameters *numberOfRA-Preambles* and *sizeOfRA-PreamblesGroupA:*

    If *sizeOfRA-PreamblesGroupA* is equal to *numberOfRA-Preambles* then there is no Random Access Preambles group B. The preambles in Random Access Preamble group A are the preambles 0 to *sizeOfRA-PreamblesGroupA*-1 and, if it exists, the preambles in Random Access Preamble group B are the preambles *sizeOfRA-PreamblesGroupA* to *numberOfRA-Preambles*-1 from the set of 64 preambles as defined in [7].

- if Random Access Preambles group B exists, the thresholds, *messagePowerOffsetGroupB* and *messageSizeGroupA,* the configured UE transmitted power of the Serving Cell performing the Random Access Procedure, $P_{CMAX,c}$ [10], and the offset between the preamble and Msg3, *deltaPreambleMsg3,* that are required for selecting one of the two groups of Random Access Preambles (PCell only).

- the RA response window size *ra-ResponseWindow-Size*.

- the power-ramping factor *powerRampingStep.*

- the maximum number of preamble transmission *preambleTransMax.*

- the initial preamble power *preambleInitialReceived-TargetPower.*

- the preamble format based offset DELTA_PREAMBLE (see subclause 7.6).

- the maximum number of Msg3 HARQ transmissions *maxHARQ-Msg3Tx* (PCell only).

- the Contention Resolution Timer *mac-Contention-ResolutionTimer* (PCell only).

NOTE: The above parameters may be updated from upper layers before each Random Access procedure is initiated.
The Random Access procedure shall be performed as follows:

- Flush the Msg3 buffer;

- set the PREAMBLE_TRANSMISSION_COUNTER to 1;

- set the backoff parameter value in the UE to 0 ms;

- for the RN, suspend any RN subframe configuration;

- proceed to the selection of the Random Access Resource (see subclause 5.1.2).

NOTE: There is only one Random Access procedure ongoing at any point in time. If the UE receives a request for a new Random Access procedure while another is already ongoing, it is up to UE implementation whether to continue with the ongoing procedure or start with the new procedure.

### 5.1.2 Random Access Resource selection

The Random Access Resource selection procedure shall be performed as follows:

- If *ra-PreambleIndex* (Random Access Preamble) and *ra-PRACH-MaskIndex* (PRACH Mask Index) have been explicitly signalled and *ra-PreambleIndex* is not 000000:

- the Random Access Preamble and the PRACH Mask Index are those explicitly signalled.

- else the Random Access Preamble shall be selected by the UE as follows:

- If Msg3 has not yet been transmitted, the UE shall:

- if Random Access Preambles group B exists and if the potential message size (data available for transmission plus MAC header and, where required, MAC control elements) is greater than *messageSizeGroupA* and if the pathloss is less than $P_{CMAX,c}$ (of the Serving Cell performing the Random Access Procedure) - *preambleInitialReceivedTargetPower-deltaPreambleMsg3-messagePowerOffsetGroupB,* then:

- select the Random Access Preambles group B;

- else:

- select the Random Access Preambles group A.

- else, if Msg3 is being retransmitted, the UE shall:

- select the same group of Random Access Preambles as was used for the preamble transmission attempt corresponding to the first transmission of Msg3.

- randomly select a Random Access Preamble within the selected group. The random function shall be such that each of the allowed selections can be chosen with equal probability;

- set PRACH Mask Index to 0.

- determine the next available subframe containing PRACH permitted by the restrictions given by the *prach-ConfigIndex,* the PRACH Mask Index (see subclause 7.3) and physical layer timing requirements [2] (a UE may take into account the possible occurrence of measurement gaps when determining the next available PRACH subframe);

- if the transmission mode is TDD and the PRACH Mask Index is equal to zero:

- if *ra-PreambleIndex* was explicitly signalled and it was not 000000 (i.e., not selected by MAC):

- randomly select, with equal probability, one PRACH from the PRACHs available in the determined subframe.

- else:

- randomly select, with equal probability, one PRACH from the PRACHs available in the determined subframe and the next two consecutive subframes.

- else:

- determine a PRACH within the determined subframe in accordance with the requirements of the PRACH Mask Index.

- proceed to the transmission of the Random Access Preamble (see subclause 5.1.3).

**5.1.3 Random Access Preamble transmission**

The random-access procedure shall be performed as follows:

- set PREAMBLE_RECEIVED_TARGET_POWER to *preambleInitialReceivedTargetPower*+ DELTA_PREAMBLE + (PREAMBLE-TRANSMISSION_COUNTER -1) * *powerRamping-Step;*

- instruct the physical layer to transmit a preamble using the selected PRACH, corresponding RA-RNTI, preamble index and PREAMBLE_RECEIVED_TARGET_POWER.

**5.1.4 Random Access Response reception**

Once the Random Access Preamble is transmitted and regardless of the possible occurrence of a measurement gap, the UE shall monitor the PDCCH of the PCell for Random Access Response(s) identified by the RA-RNTI defined below, in the RA Response window which starts at the subframe that contains the end of the preamble transmission [7] plus three subframes and has length *ra-ResponseWindowSize* subframes. The RA-RNTI associated with the PRACH in which the Random Access Preamble is transmitted, is computed as:

$$RA\text{-}RNTI = 1 + t\_id + 10 * f\_id$$

Where t_id is the index of the first subframe of the specified PRACH ($0 \leq t\_id < 10$), and f_id is the index of the specified PRACH within that subframe, in ascending order of frequency domain ($0 \leq f\_id < 6$). The UE may stop monitoring for Random Access Response(s) after successful reception of a Random Access Response containing Random Access Preamble identifiers that matches the transmitted Random Access Preamble.

- If a downlink assignment for this TTI has been received on the PDCCH for the RA-RNTI and the received TB is successfully decoded, the UE shall regardless of the possible occurrence of a measurement gap:

- if the Random Access Response contains a Backoff Indicator subheader:

- set the backoff parameter value in the UE as indicated by the BI field of the Backoff Indicator subheader and Table 7.2-1.

- else, set the backoff parameter value in the UE to 0 ms.

- if the Random Access Response contains a Random Access Preamble identifier corresponding to the transmitted Random Access Preamble (see subclause 5.1.3), the UE shall:

- consider this Random Access Response reception successful and apply the following actions for the serving cell where the Random Access Preamble was transmitted:

- process the received Timing Advance Command (see subclause 5.2);

- indicate the *preambleInitialReceivedTargetPower* and the amount of power ramping applied to the latest preamble transmission to lower layers (i.e., (PREAMBLE_TRANSMISSION_COUNTER - 1) * *powerRampingStep*);

- process the received UL grant value and indicate it to the lower layers;

- if *ra-PreambleIndex* was explicitly signalled and it was not 000000 (i.e., not selected by MAC):

- consider the Random Access procedure successfully completed.

- else, if the Random Access Preamble was selected by UE MAC:

- set the Temporary C-RNTI to the value received in the Random Access Response message no later than at the time of the first transmission corresponding to the UL grant provided in the Random Access Response message;

- if this is the first successfully received Random Access Response within this Random Access procedure:

- if the transmission is not being made for the CCCH logical channel, indicate to the Multiplexing and assembly entity to include a C-RNTI MAC control element in the subsequent uplink transmission;

- obtain the MAC PDU to transmit from the "Multiplexing and assembly" entity and store it in the Msg3 buffer.

NOTE: When an uplink transmission is required, e.g., for contention resolution, the eNB should not provide a grant smaller than 56 bits in the Random Access Response.

NOTE: If within a Random Access procedure, an uplink grant provided in the Random Access Response for the same group of Random Access Preambles has a different size than the first uplink grant allocated during that Random Access procedure, the UE behavior is not defined.

If no Random Access Response is received within the RA Response window, or if none of all received Random Access Responses contains a Random Access Preamble identifier corresponding to the transmitted Random Access Preamble, the Random Access Response reception is considered not successful and the UE shall:

- increment PREAMBLE_TRANSMISSION_COUNTER by 1;

- If PREAMBLE_TRANSMISSION_COUNTER = *preambleTransMax* + 1:

- if the Random Access Preamble is transmitted on the PCell:

- indicate a Random Access problem to upper layers;

- if the Random Access Preamble is transmitted on an SCell:

- consider the Random Access procedure unsuccessfully completed.

- if in this Random Access procedure, the Random Access Preamble was selected by MAC:

- based on the backoff parameter in the UE, select a random backoff time according to a uniform distribution between 0 and the Backoff Parameter Value;

- delay the subsequent Random Access transmission by the backoff time;

- proceed to the selection of a Random Access Resource (see subclause 5.1.2).

**5.1.5 Contention Resolution**

Contention Resolution is based on either C-RNTI on PDCCH of the PCell or UE Contention Resolution Identity on DL-SCH.

Once Msg3 is transmitted, the UE shall:

- start *mac-ContentionResolutionTimer* and restart *mac-ContentionResolutionTimer* at each HARQ retransmission;

- regardless of the possible occurrence of a measurement gap, monitor the PDCCH until *mac-ContentionResolutionTimer* expires or is stopped;

- if notification of a reception of a PDCCH transmission is received from lower layers, the UE shall:

- if the C-RNTI MAC control element was included in Msg3:

- if the Random Access procedure was initiated by the MAC sublayer itself and the PDCCH transmission is addressed to the C-RNTI and contains an UL grant for a new transmission; or

- if the Random Access procedure was initiated by a PDCCH order and the PDCCH transmission is addressed to the C-RNTI:

- consider this Contention Resolution successful;

- stop *mac-ContentionResolutionTimer;*

- discard the Temporary C-RNTI;

- consider this Random Access procedure successfully completed.

- else if the CCCH SDU was included in Msg3 and the PDCCH transmission is addressed to its Temporary C-RNTI:

- if the MAC PDU is successfully decoded:

- stop *mac-ContentionResolutionTimer;*

- if the MAC PDU contains a UE Contention Resolution Identity MAC control element; and

- if the UE Contention Resolution Identity included in the MAC control element matches the CCCH SDU transmitted in Msg3:

- consider this Contention Resolution successful and finish the disassembly and demultiplexing of the MAC PDU;

- set the C-RNTI to the value of the Temporary C-RNTI;

- discard the Temporary C-RNTI;

- consider this Random Access procedure successfully completed.

- else

- discard the Temporary C-RNTI;

- consider this Contention Resolution not successful and discard the successfully decoded MAC PDU.

- if *mac-ContentionResolutionTimer* expires:

- discard the Temporary C-RNTI;

- consider the Contention Resolution not successful.

- if the Contention Resolution is considered not successful the UE shall:

- flush the HARQ buffer used for transmission of the MAC PDU in the Msg3 buffer;

- increment PREAMBLE_TRANSMISSION_COUNTER by 1;

- If PREAMBLE_TRANSMISSION_COUNTER = *preambleTransMax* + 1:

- indicate a Random Access problem to upper layers.

- based on the backoff parameter in the UE, select a random backoff time according to a uniform distribution between 0 and the Backoff Parameter Value;

- delay the subsequent Random Access transmission by the backoff time;

- proceed to the selection of a Random Access Resource (see subclause 5.1.2).

**5.1.6 Completion of the Random Access procedure**

At completion of the Random Access procedure, the UE shall:

- discard explicitly signalled *ra-PreambleIndex* and *ra-PRACH-MaskIndex,* if any;

- flush the HARQ buffer used for transmission of the MAC PDU in the Msg3 buffer.

In addition, the RN shall resume the suspended RN subframe configuration, if any.
[...]

**5.4 UL-SCH data transfer**

**5.4.1 UL Grant reception**

In order to transmit on the UL-SCH the UE must have a valid uplink grant (except for non-adaptive HARQ retransmissions) which it may receive dynamically on the PDCCH or in a Random Access Response or which may be configured semi-persistently. To perform requested transmissions, the MAC layer receives HARQ information from lower layers. When the physical layer is configured for uplink spatial multiplexing, the MAC layer can receive up to two grants (one per HARQ process) for the same TTI from lower layers.
If the UE has a C-RNTI, a Semi-Persistent Scheduling C-RNTI, or a Temporary C-RNTI, the UE shall for each TTI and for each Serving Cell belonging to a TAG that has a running *timeAlignmentTimer* and for each grant received for this TTI:

- if an uplink grant for this TTI and this Serving Cell has been received on the PDCCH for the UE's C-RNTI or Temporary C-RNTI; or

- if an uplink grant for this TTI has been received in a Random Access Response:

- if the uplink grant is for UE's C-RNTI and if the previous uplink grant delivered to the HARQ entity for the same HARQ process was either an uplink grant received for the UE's Semi-Persistent Scheduling C-RNTI or a configured uplink grant:

- consider the NDI to have been toggled for the corresponding HARQ process regardless of the value of the NDI.

- deliver the uplink grant and the associated HARQ information to the HARQ entity for this TTI.

- else, if this Serving Cell is the PCell and if an uplink grant for this TTI has been received for the PCell on the PDCCH of the PCell for the UE's Semi-Persistent Scheduling C-RNTI:

- if the NDI in the received HARQ information is 1:

- consider the NDI for the corresponding HARQ process not to have been toggled;

- deliver the uplink grant and the associated HARQ information to the HARQ entity for this TTI.

- else if the NDI in the received HARQ information is 0:

- if PDCCH contents indicate SPS release:

- clear the configured uplink grant (if any).

- else:

- store the uplink grant and the associated HARQ information as configured uplink grant;

- initialise (if not active) or re-initialise (if already active) the configured uplink grant to start in this TTI and to recur according to rules in subclause 5.10.2;

- consider the NDI bit for the corresponding HARQ process to have been toggled;

- deliver the configured uplink grant and the associated HARQ information to the HARQ entity for this TTI.

- else, if this Serving Cell is the PCell and an uplink grant for this TTI has been configured for the PCell:

- consider the NDI bit for the corresponding HARQ process to have been toggled;

- deliver the configured uplink grant, and the associated HARQ information to the HARQ entity for this TTI.

NOTE: The period of configured uplink grants is expressed in TTIs.

NOTE: If the UE receives both a grant in a Random Access Response and a grant for its C-RNTI or Semi persistent scheduling C-RNTI requiring transmissions on the PCell in the same UL subframe, the UE may choose to continue with either the grant for its RA-RNTI or the grant for its C-RNTI or Semi persistent scheduling C-RNTI.

NOTE: When a configured uplink grant is indicated during a measurement gap and indicates an UL-SCH transmission during a measurement gap, the UE processes the grant but does not transmit on UL-SCH.

**5.4.2 HARQ operation**

**5.4.2.1 HARQ entity**

There is one HARQ entity at the UE for each Serving Cell with configured uplink, which maintains a number of parallel HARQ processes allowing transmissions to take place continuously while waiting for the HARQ feedback on the successful or unsuccessful reception of previous transmissions.

The number of parallel HARQ processes per HARQ entity is specified in [2], clause 8.

When the physical layer is configured for uplink spatial multiplexing [2], there are two HARQ processes associated with a given TTI. Otherwise there is one HARQ process associated with a given TTI.

At a given TTI, if an uplink grant is indicated for the TTI, the HARQ entity identifies the HARQ process(es) for which a transmission should take place. It also routes the received HARQ feedback (ACK/NACK information), MCS and resource, relayed by the physical layer, to the appropriate HARQ process(es).

When TTI bundling is configured, the parameter TTI_BUNDLE_SIZE provides the number of TTIs of a TTI bundle. TTI bundling operation relies on the HARQ entity for invoking the same HARQ process for each transmission that is part of the same bundle. Within a bundle HARQ retransmissions are non-adaptive and triggered without waiting for feedback from previous transmissions according to TTI_BUNDLE SIZE. The HARQ feedback of a bundle is only received for the last TTI of the bundle (i.e the TTI corresponding to TTI_BUNDLE_SIZE), regardless of whether a transmission in that TTI takes place or not (e.g. when a measurement gap occurs). A retransmission of a TTI bundle is also a TTI bundle. TTI bundling is not supported when the UE is configured with one or more SCells with configured uplink.

TTI bundling is not supported for RN communication with the E-UTRAN in combination with an RN subframe configuration.

For transmission of Msg3 during Random Access (see section 5.1.5) TTI bundling does not apply. For each TTI, the HARQ entity shall:

- identify the HARQ process(es) associated with this TTI, and for each identified HARQ process:
- if an uplink grant has been indicated for this process and this TTI:
- if the received grant was not addressed to a Temporary C-RNTI on PDCCH and if the NDI provided in the associated HARQ information has been toggled compared to the value in the previous transmission of this HARQ process; or
- if the uplink grant was received on PDCCH for the C-RNTI and the HARQ buffer of the identified process is empty; or
- if the uplink grant was received in a Random Access Response:
- if there is a MAC PDU in the Msg3 buffer and the uplink grant was received in a Random Access Response:
- obtain the MAC PDU to transmit from the Msg3 buffer.
- else:
- obtain the MAC PDU to transmit from the "Multiplexing and assembly" entity;
- deliver the MAC PDU and the uplink grant and the HARQ information to the identified HARQ process;
- instruct the identified HARQ process to trigger a new transmission.
- else:
- deliver the uplink grant and the HARQ information (redundancy version) to the identified HARQ process;
- instruct the identified HARQ process to generate an adaptive retransmission.
- else, if the HARQ buffer of this HARQ process is not empty:
- instruct the identified HARQ process to generate a non-adaptive retransmission.

When determining if NDI has been toggled compared to the value in the previous transmission UE shall ignore NDI received in all uplink grants on PDCCH for its Temporary C-RNTI.

**5.4.2.2 HARQ process**

Each HARQ process is associated with a HARQ buffer.

Each HARQ process shall maintain a state variable CURRENT_TX_NB, which indicates the number of transmissions that have taken place for the MAC PDU currently in the buffer, and a state variable HARQ_FEEDBACK, which indicates the HARQ feedback for the MAC PDU currently in the buffer. When the HARQ process is established, CURRENT_TX_NB shall be initialized to 0.

The sequence of redundancy versions is 0, 2, 3, 1. The variable CURRENT_IRV is an index into the sequence of redundancy versions. This variable is updated modulo 4.

New transmissions are performed on the resource and with the MCS indicated on PDCCH or Random Access Response. Adaptive retransmissions are performed on the resource and, if provided, with the MCS indicated on PDCCH. Non-adaptive retransmission is performed on the same resource and with the same MCS as was used for the last made transmission attempt.

The UE is configured with a Maximum number of HARQ transmissions and a Maximum number of Msg3 HARQ transmissions by RRC: *maxHARQ-Tx* and *maxHARQ-Msg3Tx* respectively. For transmissions on all HARQ processes and all logical channels except for transmission of a MAC PDU stored in the Msg3 buffer, the maximum number of transmissions shall be set to *maxHARQ-Tx*. For transmission of a MAC PDU stored in the Msg3 buffer, the maximum number of transmissions shall be set to *maxHARQ-Msg3Tx*.

When the HARQ feedback is received for this TB, the HARQ process shall:

-    set HARQ_FEEDBACK to the received value.

If the HARQ entity requests a new transmission, the HARQ process shall:

-    set CURRENT_TX_NB to 0;

-    set CURRENT_IRV to 0;

-    store the MAC PDU in the associated HARQ buffer;

-    store the uplink grant received from the HARQ entity;

-    set HARQ_FEEDBACK to NACK;

-    generate a transmission as described below.

If the HARQ entity requests a retransmission, the HARQ process shall:

-    increment CURRENT_TX_NB by 1;

-    if the HARQ entity requests an adaptive retransmission:

-    store the uplink grant received from the HARQ entity;

-    set CURRENT_IRV to the index corresponding to the redundancy version value provided in the HARQ information;

-    set HARQ_FEEDBACK to NACK;

-    generate a transmission as described below.

-    else if the HARQ entity requests a non-adaptive retransmission:

-    if HARQ_FEEDBACK = NACK:

-    generate a transmission as described below.

NOTE: When receiving a HARQACK alone, the UE keeps the data in the HARQ buffer.

NOTE: When no UL-SCH transmission can be made due to the occurrence of a measurement gap, no HARQ feedback can be received and a non-adaptive retransmission follows.

To generate a transmission, the HARQ process shall:

-    if the MAC PDU was obtained from the Msg3 buffer; or

-    if there is no measurement gap at the time of the transmission and, in case of retransmission, the retransmission does not collide with a transmission for a MAC PDU obtained from the Msg3 buffer in this TTI:

-    instruct the physical layer to generate a transmission according to the stored uplink grant with the redundancy version corresponding to the CURRENT_IRV value;

-    increment CURRENT_IRV by 1;

-    if there is a measurement gap at the time of the HARQ feedback reception for this transmission and if the MAC PDU was not obtained from the Msg3 buffer:

-    set HARQ_FEEDBACK to ACK at the time of the HARQ feedback reception for this transmission.

After performing above actions, the HARQ process then shall:

-    if CURRENT_TX_NB = maximum number of transmissions -1:

- flush the HARQ buffer;

## 5.13 Activation/Deactivation of SCells

If the U E is configured with one or more SCells, the network may activate and deactivate the configured SCells. The PCell is always activated. The network activates and deactivates the SCell(s) by sending the Activation/Deactivation MAC control element described in subclause 6.1.3.8. Furthermore, the UE maintains a *sCellDeactivationTimer* timer per configured SCell and deactivates the associated SCell upon its expiry. The same initial timer value applies to each instance of the *sCellDeactivationTimer* and it is configured by RRC. The configured SCells are initially deactivated upon addition and after a handover.

The UE shall for each TTI and for each configured SCell:

- if the UE receives an Activation/Deactivation MAC control element in this TTI activating the SCell, the UE shall in the TTI according to the timing defined in [2]:

- activate the SCell; i.e. apply normal SCell operation including:

- SRS transmissions on the SCell;

- CQI/PMI/RI/PTI reporting for the SCell;

- PDCCH monitoring on the SCell;

- PDCCH monitoring for the SCell.

- start or restart the *sCellDeactivationTimer* associated with the SCell;

- trigger PHR according to subclause 5.4.6.

- else, if the UE receives an Activation/Deactivation MAC control element in this TTI deactivating the SCell; or

- if the *sCellDeactivationTimer* associated with the activated SCell expires in this TTI:

- in the TTI according to the timing defined in [2]:

- deactivate the SCell;

- stop the *sCellDeactivationTimer* associated with the SCell;

- flush all HARQ buffers associated with the SCell.

- if PDCCH on the activated SCell indicates an uplink grant or downlink assignment; or

- if PDCCH on the Serving Cell scheduling the activated SCell indicates an uplink grant or a downlink assignment for the activated SCell:

- restart the *sCellDeactivationTimer* associated with the SCell;

- if the SCell is deactivated:

- not transmit SRS on the SCell;

- not report CQI/PMI/RI/PTI for the SCell;

- not transmit on UL-SCH on the SCell;

- not transmit on RACH on the SCell;

- not monitor the PDCCH on the SCell;

- not monitor the PDCCH for the SCell.

NOTE: When SCell is deactivated, the ongoing Random Access procedure on the SCell, if any, is aborted.

## 6.1.3.8 Activation/Deactivation MAC Control Element

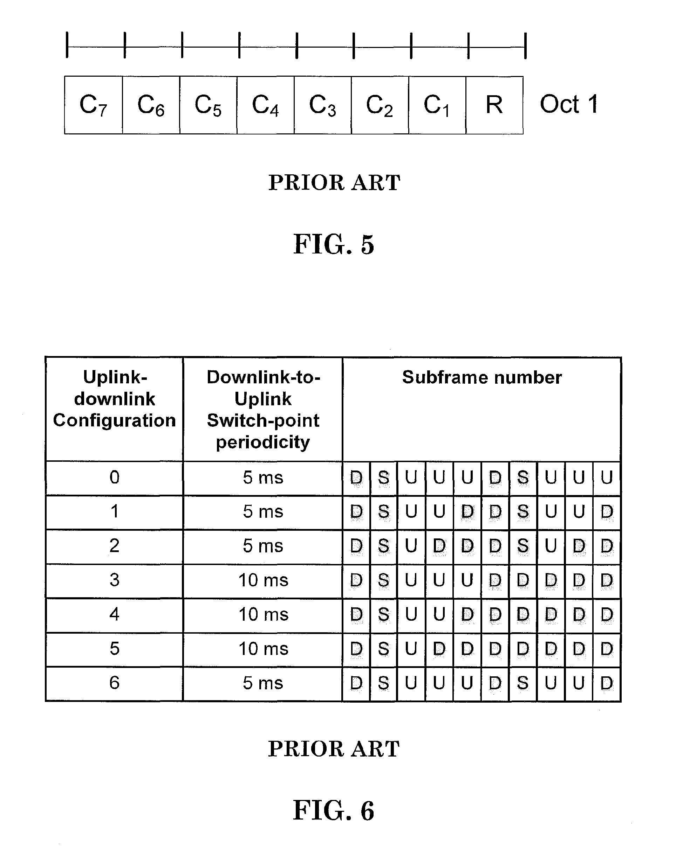

The Activation/Deactivation MAC control element is identified by a MAC PDU subheader with LCID as specified in table 6.2.1-1. It has a fixed size and consists of a single octet containing seven C-fields and one R-field. The Activation/Deactivation MAC control element is defined as follows (figure 6.1.3.8-1).

- $C_i$: if there is an SCell configured with *SCellIndex* i as specified in [8], this field indicates the activation/deactivation status of the SCell with *SCellIndex* i , else the UE shall ignore the $C_i$ field. The $C_i$ field is set to "1" to indicate that the SCell with *SCellIndex* i shall be activated. The $C_i$ field is set to "0" to indicate that the SCell with *SCellIndex* i shall be deactivated;

- R: Reserved bit, set to "0".

**See FIG. 5.**

The following is quoted from 3GPP TR36.392 v12.0.0:

Small cells using low power nodes are considered promising to cope with mobile traffic explosion, especially for hotspot deployments in indoor and outdoor scenarios. A low-power node generally means a node whose Tx power is lower than macro node and BS classes, for example Pico and Femto eNB are both applicable. Small cell enhancements for E-UTRA and E-UTRAN will focus on additional functionalities for enhanced performance in hotspot areas for indoor and outdoor using low power nodes. This document captures the scenarios and requirements for small cell enhancements. 3GPP TR 36.913 should be used as reference whenever applicable in order to avoid duplication of the requirements.

The following is quoted from 3GPP RP-122033:

**4 Objective ***

The objective of this study is to identify potential technologies in the protocol and architecture for enhanced support of small cell deployment and operation which should satisfy scenarios and requirements defined in TR 36.932.
The study shall be conducted on the following aspects:

• Identify and evaluate the benefits of UEs having dual connectivity to macro and small cell layers served by different or same carrier and for which scenarios such dual connectivity is feasible and beneficial.

• Identify and evaluate potential architecture and protocol enhancements for the scenarios in TR 36.932 and in particular for the feasible scenario of dual connectivity and minimize core network impacts if feasible, including:

  - Overall structure of control and user plane and their relation to each other, e.g., supporting C-plane and U-plane in different nodes, termination of different protocol layers, etc.

• Identify and evaluate the necessity of overall Radio Resource Management structure and mobility enhancements for small cell deployments:

  - Mobility mechanisms for minimizing inter-node UE context transfer and signalling towards the core network.

  - Measurement and cell identification enhancements while minimizing increased UE battery consumption.

For each potential enhancement, the gain, complexity and specification impact should be assessed.
The study shall focus on potential enhancements which are not covered by other SI/WIs.
A discussion of Carrier Aggregation (CA) in 3GPP TS36.300 are quoted as below.

**5.5 Carrier Aggregation**

In Carrier Aggregation (CA), two or more Component Carriers (CCs) are aggregated in order to support wider transmission bandwidths up to 100MHz. A UE may simultaneously receive or transmit on one or multiple CCs depending on its capabilities:

- A UE with single timing advance capability for CA can simultaneously receive and/or transmit on multiple CCs corresponding to multiple serving cells sharing the same timing advance (multiple serving cells grouped in one TAG);

- A UE with multiple timing advance capability for CA can simultaneously receive and/or transmit on multiple CCs corresponding to multiple serving cells with different timing advances (multiple serving cells grouped in multiple TAGs). E-UTRAN ensures that each TAG contains at least one serving cell;

- A non-CA capable UE can receive on a single CC and transmit on a single CC corresponding to one serving cell only (one serving cell in one TAG).

CA is supported for both contiguous and non-contiguous CCs with each CC limited to a maximum of 110 Resource Blocks in the frequency domain using the Rel-8/9 numerology.
It is possible to configure a UE to aggregate a different number of CCs originating from the same eNB and of possibly different bandwidths in the UL and the DL:

- The number of DL CCs that can be configured depends on the DL aggregation capability of the UE;

- The number of UL CCs that can be configured depends on the UL aggregation capability of the UE;

- It is not possible to configure a UE with more UL CCs than DL CCs;

- In typical TDD deployments, the number of CCs and the bandwidth of each CC in UL and DL is the same.

- The number of TAGs that can be configured depends on the TAG capability of the UE.

CCs originating from the same eNB need not to provide the same coverage.
CCs shall be LTE Rel-8/9 compatible. Nevertheless, existing mechanisms (e.g. barring) may be used to avoid Rel-8/9 UEs to camp on a CC.
The spacing between centre frequencies of contiguously aggregated CCs shall be a multiple of 300 kHz. This is in order to be compatible with the 100 kHz frequency raster of Rel-8/9 and at the same time preserve orthogonality of the subcarriers with 15 kHz spacing. Depending on the aggregation scenario, the $n$ x 300 kHz spacing can be facilitated by insertion of a low number of unused subcarriers between contiguous CCs.
[...]

## 7.5 Carrier Aggregation

When CA is configured, the UE only has one RRC connection with the network. At RRC connection establishment/re-establishment/handover, one serving cell provides the NAS mobility information (e.g. TAI), and at RRC connection re-establishment/handover, one serving cell provides the security input. This cell is referred to as the Primary Cell (PCell). In the downlink, the carrier corresponding to the PCell is the Downlink Primary Component Carrier (DL PCC) while in the uplink it is the Uplink Primary Component Carrier (UL PCC).

Depending on UE capabilities, Secondary Cells (SCells) can be configured to form together with the PCell a set of serving cells. In the downlink, the carrier corresponding to an SCell is a Downlink Secondary Component Carrier (DL SCC) while in the uplink it is an Uplink Secondary Component Carrier (UL SCC).

The configured set of serving cells for a UE therefore always consists of one PCell and one or more SCells:

- For each SCell the usage of uplink resources by the UE in addition to the downlink ones is configurable (the number of DL SCCs configured is therefore always larger than or equal to the number of UL SCCs and no SCell can be configured for usage of uplink resources only);

- From a UE viewpoint, each uplink resource only belongs to one serving cell;

- The number of serving cells that can be configured depends on the aggregation capability of the UE (see subclause 5.5);

- PCell can only be changed with handover procedure (i.e. with security key change and RACH procedure);

- PCell is used for transmission of PUCCH;

- Unlike SCells, PCell cannot be de-activated (see subclause 11.2);

- Re-establishment is triggered when PCell experiences RLF, not when SCells experience RLF;

- NAS information is taken from PCell.

The reconfiguration, addition and removal of SCells can be performed by RRC. At intra-LTE handover, RRC can also add, remove, or reconfigure SCells for usage with the target PCell. When adding a new SCell, dedicated RRC signalling is used for sending all required system information of the SCell i.e. while in connected mode, UEs need not acquire broadcasted system information directly from the SCells.

See FIG. 6

Active Time: Time related to DRX operation, as defined in subclause 5.7, during which the UE monitors the PDCCH in PDCCH-subframes.
PDCCH-subframe: Refers to a subframe with PDCCH. For FDD UE operation, this represents any subframe; for TDD UE operation, if UE is capable of simultaneous reception and transmission in the aggregated cells, this represents the union of downlink subframes and subframes including DwPTS of all serving cells, except serving cells that are configured with *schedulingCellId*; otherwise, this represents the subframes where the PCell is configured as a downlink subframe or a subframe including DwPTS.

Considering that UE is configured with two eNBs (i.e., Master eNB (MeNB) and Secondary eNB (SeNB)) with non-ideal backhaul up to 60 ms for latency, activation and deactivation operation could be hardly coordinated between MeNB and SeNB immediately, especially that a activation/deactivation MAC Control Element is applied for all configured Cells/eNBs.

According to the various embodiments disclosed herein, non-ideal Backhaul between MeNB and SeNB (e.g. may be up to 60 ms). Additionally, at least one Cell is configured in MeNB and one Cell is configured in SeNB. Since Activation/Deactivation command is used to turn on/off Cell quickly, MeNB and SeNB may not be able to exchange information between each other as quick as the scheduling of the command.

In the various embodiments, according to the invention, the activation/deactivation operation for inter-eNB is improved. In some embodiments according to the invention, the UE would ignore (or just utilize) some information carried in the command for the configured Cells in MeNB and SeNB. In one embodiment according to the invention, the UE may ignore the information of Cells for MeNB when the command is received from SeNB. In one embodiment according to the invention, the UE may ignore the information of Cells for SeNB when the command is received from MeNB. In another embodiment according to the invention, for some specific Cell, the UE would ignore deactivation information and utilize activation information, or ignore activation information and utilize deactivation information. In another embodiment according to the invention, some specific Cell may be considered such as PCell in MeNB or SeNB.

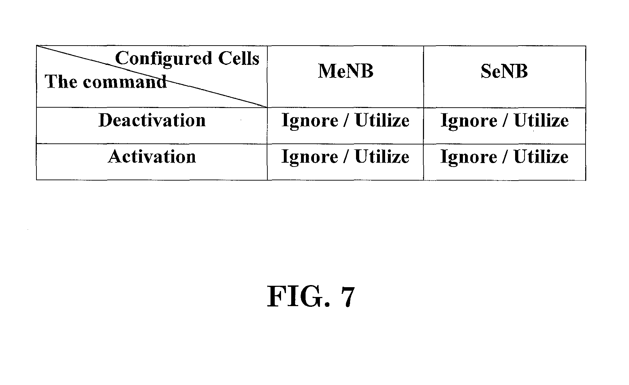

Various combinations of the above embodiments according to the invention may be utilized. As shown in FIG. 7, there are sixteen (16) potential combinations. In other embodiments according to the invention, there may be more combinations if special Cells are considered. Of course for all configured Cells, the combination of all "Utilize" should be logically excluded because it will be the same as the prior art.

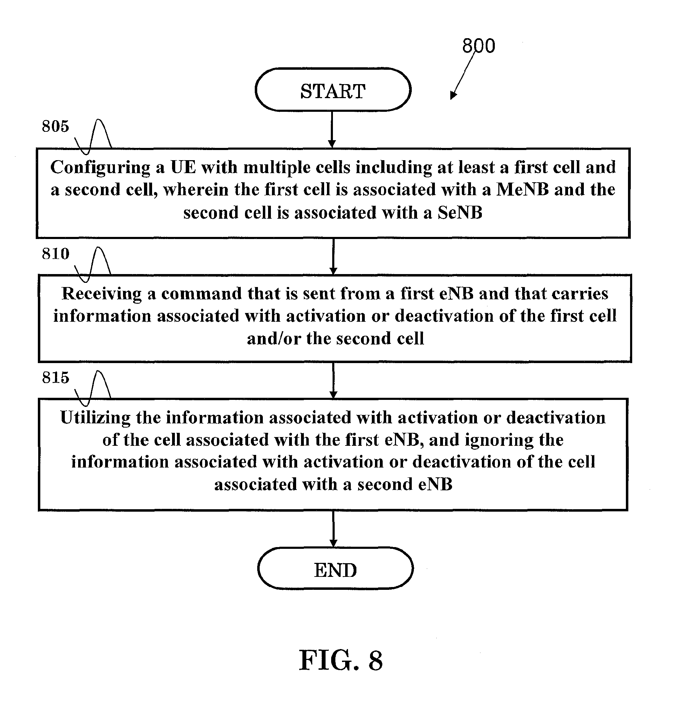

FIG. 8 is a flow chart 800 in accordance with one exemplary embodiment according to the invention. In step 805, a UE is configured with multiple cells multiple cells including at least a first cell and a second cell, wherein the first cell is associated with a Master evolved Node B (MeNB) and the second cell is associated with a Secondary evolved Node B (SeNB). Step 810 involves receiving a command that is sent from a first eNB and that carries information associated with activation or deactivation of the first cell and/or the second cell. Step 815 includes utilizing the information associated with activation or deactivation of the cell associated with the first eNB, and ignoring the information associated with activation or deactivation of the cell associated with a second eNB. In one embodiment thereof, the first eNB could be the MeNB, and the second eNB could be the SeNB. Alternatively, the first eNB could be the SeNB, and the second eNB could be the MeNB. Furthermore, the command could be an Activation/Deactivation MAC control element.

Referring back to FIGS. 3 and 4, the device 300 includes a program code 312 stored in memory 310. In one embodiment, the CPU 308 could execute program code 312 to execute one or more of the following: (i) configuring a UE with multiple cells multiple cells including at least a first cell and a second cell, wherein the first cell is associated with a Master evolved Node B (MeNB) and the second cell is associated with a Secondary evolved Node B (SeNB); (ii) receiving a command that is sent from a first eNB and that carries information associated with activation or deactivation of the first cell and/or the second cell information associated; and (iii) utilizing the information associated with activation or deactivation of the cell associated with the first eNB, and ignoring the information associated with activation or deactivation of the cell associated with a second eNB.

In addition, the CPU 308 can execute the program code 312 to perform all of the above-described actions and steps or others described herein, in particular those of the exemplary embodiment described in paragraph [0042] above.

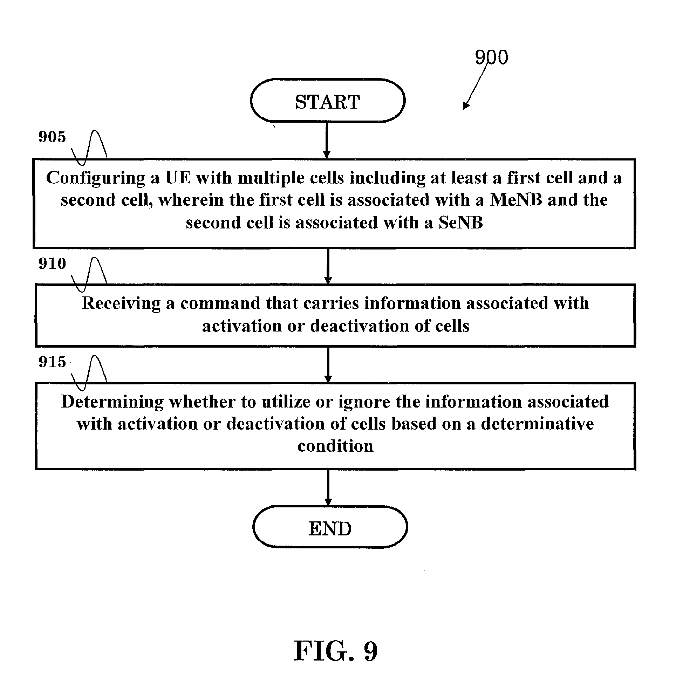

FIG. 9 is a flow chart 900 in accordance with one further exemplary embodiment according to the invention. In step 905, a UE is configured with multiple cells multiple cells including at least a first cell and a second cell, wherein the first cell is associated with a Master evolved Node B (MeNB) and the second cell is associated with a Secondary evolved Node B (SeNB). Step 910 involves receiving a command that carries information associated with activation or deactivation of cells. Step 915 includes determining whether to utilize or ignore the information associated with activation or deactivation of cells based on a determinative condition.

In one preferred embodiment thereof, the determinative condition includes which status of the information applies to the first cell and/or the second cell. Furthermore, the command could be an Activation/Deactivation MAC control element.

In one further preferred embodiment thereof, which might preferably be combined with the preferred embodiment thereof, the determinative condition could include to which cell the information associated with activation or deactivation applies. For example, the first cell could be the cell to which the information associated with activation or deactivation applies. Alternatively, the second cell could be the cell to which the information associated with activation or deactivation applies. In addition, a specific cell could be the cell to which the information associated with activation or deactivation applies.

Referring back to FIGS. 3 and 4, the device 300 includes a program code 312 stored in memory 310. In one embodiment, the CPU 308 could execute program code 312 to execute one or more of the following: (i) configuring a UE with multiple cells multiple cells including at least a first cell and a second cell, wherein the first cell is associated with a Master evolved Node B (MeNB) and the second cell is associated with a Secondary evolved Node B (SeNB); (ii) receiving a command that carries information associated with activation or deactivation of cells; and (iii) determining whether to utilize or ignore the information associated with activation or deactivation of cells based on a determinative condition.

In addition, the CPU 308 can execute the program code 312 to perform all of the above-described actions and steps or others described herein, in particular those of the further exemplary embodiment described in paragraphs [0045] to [0047] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for small cell enhancement in a wireless communication system, the method comprising:

   configuring a user equipment, in the following also referred to as UE, with multiple cells including at least a first cell and a second cell, wherein the first cell is associated with a Master evolved Node B, in the following also referred to as MeNB, and the second cell is associated with a Secondary evolved Node B, in the following also referred to as SeNB (805);
   receiving a command that is sent from a first evolved node B, in the following also referred to as eNB, and that carries information associated with activation or deactivation of the first cell and/or the second cell (810); and
   utilizing the information associated with activation or deactivation of the cell associated with the first eNB, and ignoring the information associated with activation or deactivation of the cell associated with a second eNB (815).

**2.** The method of claim 1, wherein the first eNB is the MeNB, and the second eNB is the SeNB, or wherein the first eNB is the SeNB, and the second eNB is the MeNB.

**3.** The method of claim 1 or 2, wherein the command is an Activation/Deactivation MAC control element.

**4.** A method for small cell enhancement in a wireless communication system, the method comprising:

configuring a user equipment, in the following also referred to as UE, with at least a first cell and a second cell, wherein the first cell is associated with a Master evolved Node B, in the following also referred to as MeNB, and the second cell is associated with a Secondary evolved Node B, in the following also referred to as SeNB (905);

receiving a command that carries information associated with activation or deactivation of cells (910); and

determining whether to utilize or ignore the information associated with activation or deactivation of cells based on a determinative condition (915).

**5.** The method of claim 4, wherein the determinative condition includes a source from which eNB the command is sent.

**6.** The method of claim 5, wherein the command is sent from the MeNB, or wherein the command is sent from the SeNB.

**7.** The method of anyone of claims 4 to 6, wherein the determinative condition includes which status of the information applies to the first cell and/or the second cell.

**8.** The method of anyone of claims 4 to 7, wherein the determinative condition includes to which cell the information associated with activation or deactivation applies.

**9.** The method of claim 8, wherein the first cell is the cell to which the information associated with activation or deactivation applies, or wherein the second cell is the cell to which the information associated with activation or deactivation applies, or wherein a specific cell is the cell to which the information associated with activation or deactivation applies.

**10.** The method of anyone of claims 4 to 9, wherein the command is an Activation/Deactivation MAC control element.

**11.** A communication device (300) for small cell enhancements in a wireless communication system, the communication device (300) comprising:

a control circuit (306);
a processor (308) installed in the control circuit (306);
a memory (310) installed in the control circuit (306) and operatively coupled to the processor (308);
wherein the processor (308) is configured to execute a program code (312) stored in memory (310) to provide small cell enhancements by performing the method steps as defined in anyone of the preceding claims.

**FIG. 1**

FIG. 2

_300_

```
┌─────────────────────────────────────────────┐
│  ┌──────────────┐      ┌──────────────┐       │
│  │   INPUT      │      │   OUTPUT     │       │
│  │   DEVICE     │      │   DEVICE     │       │
│  │    302       │      │    304       │       │
│  └──────────────┘      └──────────────┘       │
│         ↕                     ↕               │
│  ┌─────────────────────────────────────────┐ │
│  │      CONTROL CIRCUIT 306                 │ │
│  │  ┌───────────────────────────────────┐  │ │
│  │  │          CPU 308                  │  │ │
│  │  └───────────────────────────────────┘  │ │
│  │                 ↕                       │ │
│  │  ┌───────────────────────────────────┐  │ │
│  │  │        MEMORY 310                 │  │ │
│  │  │  ┌─────────────────────────────┐  │  │ │
│  │  │  │   PROGRAM CODE 312          │  │  │ │
│  │  │  └─────────────────────────────┘  │  │ │
│  │  └───────────────────────────────────┘  │ │
│  └─────────────────────────────────────────┘ │
│                    ↕                          │
│  ┌─────────────────────────────────────────┐ │
│  │        TRANSCEIVER 314                   │ │
│  └─────────────────────────────────────────┘ │
└─────────────────────────────────────────────┘
```

FIG. 3

PROGRAM CODE *312*

APPLICATION LAYER *400*

LAYER 3  *402*

LAYER 2 *404*

LAYER 1 *406*

FIG. 4

| C7 | C6 | C5 | C4 | C3 | C2 | C1 | R | Oct 1 |

**PRIOR ART**

**FIG. 5**

| Uplink-downlink Configuration | Downlink-to-Uplink Switch-point periodicity | Subframe number | | | | | | | | | |
|---|---|---|---|---|---|---|---|---|---|---|---|
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

**PRIOR ART**

**FIG. 6**

21

| Configured Cells⁄The command | MeNB | SeNB |
|---|---|---|
| Deactivation | Ignore / Utilize | Ignore / Utilize |
| Activation | Ignore / Utilize | Ignore / Utilize |

# FIG. 7

800

START

805

Configuring a UE with multiple cells including at least a first cell and a second cell, wherein the first cell is associated with a MeNB and the second cell is associated with a SeNB

810

Receiving a command that is sent from a first eNB and that carries information associated with activation or deactivation of the first cell and/or the second cell

815

Utilizing the information associated with activation or deactivation of the cell associated with the first eNB, and ignoring the information associated with activation or deactivation of the cell associated with a second eNB

END

FIG. 8

900

START

905

Configuring a UE with multiple cells including at least a first cell and a second cell, wherein the first cell is associated with a MeNB and the second cell is associated with a SeNB

910

Receiving a command that carries information associated with activation or deactivation of cells

915

Determining whether to utilize or ignore the information associated with activation or deactivation of cells based on a determinative condition

END

# FIG. 9

Europäisches
Patentamt

European
Patent Office

Office européen
des brevets

# EUROPEAN SEARCH REPORT

Application Number

EP 14 18 0501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NEC GROUP: "Small cell operation under macro coverage", 3GPP DRAFT; R1-130373 SMALL_CELL_UNDER_MACRO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 18 January 2013 (2013-01-18), XP050663452, Retrieved from the Internet: URL:http://www.3gpp.org/ftp/tsg_ran/WG1_RL 1/TSGR1_72/Docs/ [retrieved on 2013-01-18] * the whole document * | 1-11 | INV. H04L5/00 H04W48/20 H04W48/16 |
| X | SHARP: "PCell vs. SCell with PUCCH for inter-eNB CA", 3GPP DRAFT; R2-132052 SMALL CELL CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 11 May 2013 (2013-05-11), XP050700141, Retrieved from the Internet: URL:http://www.3gpp.org/ftp/tsg_ran/WG2_RL 2/TSGR2_82/Docs/ [retrieved on 2013-05-11] * figures 1, 2 * * table 1 * * section 2 * | 1-11 | |

TECHNICAL FIELDS
SEARCHED (IPC)

H04L
H04W

-----

-----

-/--

The present search report has been drawn up for all claims

| Place of search | Date of completion of the search | Examiner |
|---|---|---|
| The Hague | 4 December 2014 | Papadogiannis, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ................................................................

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 14 18 0501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/214541 A1 (NARASIMHA MURALI [US] ET AL) 23 August 2012 (2012-08-23) * figures 1, 4 * * paragraphs [0017] - [0023] * ----- | 1-11 | |
| X | US 2011/170420 A1 (XI FENGJUN [US] ET AL) 14 July 2011 (2011-07-14) * paragraphs [0082] - [0115] * ----- | 1-11 | |

TECHNICAL FIELDS
SEARCHED      (IPC)

The present search report has been drawn up for all claims

| Place of search | Date of completion of the search | Examiner |
|---|---|---|
| The Hague | 4 December 2014 | Papadogiannis, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.** EP 14 18 0501

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2014

| Patent document cited in search report | Publication date | Patent family member(s) | Publication date |
|---|---|---|---|
| US 2012214541 A1 | 23-08-2012 | EP 2678965 A1<br>US 2012214541 A1<br>WO 2012115802 A1 | 01-01-2014<br>23-08-2012<br>30-08-2012 |
| US 2011170420 A1 | 14-07-2011 | AR 079866 A1<br>CN 102714877 A<br>EP 2522192 A1<br>JP 2013516927 A<br>KR 20120123392 A<br>TW 201146067 A<br>US 2011170420 A1<br>WO 2011085270 A1 | 22-02-2012<br>03-10-2012<br>14-11-2012<br>13-05-2013<br>08-11-2012<br>16-12-2011<br>14-07-2011<br>14-07-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61864114 A

**Non-patent literature cited in the description**

- *E-UTRA; MAC protocol specification,* March 2013
- *Scenarios and Requirements for Small Cell Enhancements for E-UTRA and E-UTRAN,* December 2012
- *New Study Item Description: Small Cell enhancements for E-UTRA and E-UTRAN - Higher-layer aspects,* December 2012
- *E-UTRAN; Overall description; Stage 2,* December 2012
- *E-UTRA; RRC protocol specification,* March 2013
- *Protocol architecture alternatives for dual connectivity*
- *Scenarios and benefits of dual connectivity*
- *Report of 3GPP TSG RAN WG2 meeting #72.*